# EUROPEAN PATENT APPLICATION

(11) **EP 4 741 917 A1**
(43) Date of publication of application: **13.05.2026**
(21) Application number: 24835207.2
(22) Date of filing: 14.06.2024
(51) Int. Cl.: G02F 1/153

(54) **ELECTROCHROMIC FILM, COLOR-CHANGING DEVICE, AND TERMINAL PRODUCT**

(30) Priority: 04.07.2023 CN 202321737826 U
(71) Applicant: Guangyi Intelligent Tech (Suzhou) Co., Ltd., Suzhou, Jiangsu 215000 (CN)
(72) Inventor: CHEN, Xinhua, Suzhou, Jiangsu 215000 (CN); WANG, Weishu, Suzhou, Jiangsu 215000 (CN); LU, Yicai, Suzhou, Jiangsu 215000 (CN)
(74) Representative: Biallo, Dario
(86) International application number: PCT/CN2024/099268
(87) International publication number: WO 2025/007724

(57) **Abstract**

The present disclosure provides an electrochromic film, a color-changing device, and a terminal product, which pertains to the field of electrochromic technologies. The electrochromic film includes an edge portion; the edge portion includes: a corner portion corresponding to a corner area of the electrochromic film and a straight-edge portion corresponding to a non-corner area of the electrochromic film. The corner portion is provided with a corner electrode, and each straight-edge portion is provided with a straight-edge electrode; a first spacing region is formed between the corner electrode and an adjacent straight-edge electrode, and a second spacing region is formed between each pair of adjacent straight-edge electrodes; a length of the first spacing region is L₁, and a length of the second spacing region is L₂, wherein L₂<L₁. The length of the first spacing region is arranged to be greater than the length of the second spacing region. Accordingly, an electrochromic layer in the corner area changes color uniformly with other areas without overcharging or overdischarging, and premature corner failure of the electrochromic film is effectively avoided.

## Description

### CROSS-REFERENCE TO RELATED APPLICATIONS

The present disclosure claims priority to Chinese patent application No. 2023217378267, filed with CNIPA on July 4, 2023, and entitled "electrochromic film, color-changing device and terminal product", the entire contents of which are incorporated herein by reference.

### TECHNICAL FIELD

The present disclosure relates to the field of electrochromic technologies, and more particularly, to an electrochromic film, a color-changing device and a terminal product.

### BACKGROUND

Electrochromism is a technology that enables an electrochromic material to undergo reversible and stable coloring or fading phenomena under the action of an external voltage. Generally, by arranging busbars on a conductive layer of an electrochromic film, the electrochromic film is electrically connected to an external power supply through the busbars. Consequently, a voltage across the two ends of the electrochromic film is generated, and the electrochromic material of the film changes color in response to a change in the voltage across the two ends of the electrochromic film.

Currently, during the use of the electrochromic film, failure of a corresponding corner area of the film is prone to occur. Accordingly, the final color change endpoint fails to reach a preset transmittance, which leads to premature failure and ultimately causes rapid failure of the entire film.

### SUMMARY

In view of this, the present disclosure aims to overcome the deficiencies existing in the related art by providing an electrochromic film, a color-changing device and a terminal product.

The present disclosure provides the following technical solutions: an electrochromic film which includes an edge portion; the edge portion includes a corner portion corresponding to a corner area of the electrochromic film and a straight-edge portion corresponding to a non-corner area of the electrochromic film, the corner portion is provided with a corner electrode, and the straight-edge portion is provided with a straight-edge electrode; a first spacing region is formed between a corner electrode and a straight-edge electrode adjacent to the corner electrode, and a second spacing region is formed between each pair of adjacent straight-edge electrodes; a length of the first spacing region is denoted as L₁, a length of the second spacing region is denoted as L₂, wherein L₂ <L₁.

Optionally, a length of the corner electrode is L₃, and a length of the straight-edge electrode is L₄, L₃≤L₄, or L₁<L₄, or both.

Optionally, a ratio of L₁ to L₂ is m, and a value range of m is 1≤m≤4.

Optionally, a polarity of the corner electrode is opposite to a polarity of a straight-edge electrode adjacent to the corner electrode.

Optionally, a plurality of straight-edge electrodes are provided, and the second spacing region is formed between each pair of adjacent straight-edge electrodes;
On a same edge of the electrochromic film, lengths of these second spacing regions between pairs of adjacent straight-edge electrodes are identical; alternatively, a length of the second spacing region decreases from two ends of an edge towards a middle of the edge.

Optionally, a value range of the length L₁ of the first spacing region is 5 mm<L₁≤ 200 mm, or a value range of the length L₂ of the second spacing region is 5 mm≤L₂<200 mm, or both.

Optionally, a sum of a total length of the plurality of first spacing regions and a total length of the plurality of second spacing regions is denoted as S₁;
a sum of a total length of the straight-edge electrode and a total length of the corner electrode is denoted as S₂;
a ratio of S₁ to S₂ is n, and a value range of n is 1/11≤n<1.

Optionally, the electrochromic film further includes a first substrate layer, a first conductive layer, an electrochromic layer, a second conductive layer, and a second substrate layer which are laminated in sequence; the corner portion is provided with a first groove and a second groove;
the corner electrode includes a first corner electrode and a second corner electrode;
the first groove penetrates through the first substrate layer, the first conductive layer, and the electrochromic layer along a thickness direction of the electrochromic film, to expose a portion of the second conductive layer to form the first corner electrode;
the second groove penetrates through the second substrate layer, the second conductive layer, and the electrochromic layer along the thickness direction of the electrochromic film, to expose a portion of the first conductive layer to form the second corner electrode.

Furthermore, the straight-edge electrode includes a first straight-edge electrode and a second straight-edge electrode, and the straight-edge portion is provided with a third groove and a fourth groove arranged in an alternate manner;
the third groove penetrates through the first substrate layer, the first conductive layer, and the electrochromic layer along the thickness direction of the electrochromic film, to expose a portion of the second conductive layer to form the first straight-edge electrode; and
the fourth groove penetrates through the second substrate layer, the second conductive layer, and the electrochromic layer along the thickness direction of the electrochromic film, to expose a portion of the first conductive layer to form the second straight-edge electrode.

Optionally, the straight-edge electrode includes a first straight-edge electrode and a second straight-edge electrode, the electrochromic film further includes busbars, and the busbars comprising a first busbar and a second busbar;
the straight-edge portion is provided with a third groove and a fourth groove arranged in an alternate manner;
the third groove penetrates through the first substrate layer, the first conductive layer, and the electrochromic layer along the thickness direction of the electrochromic film, to expose a portion of the second conductive layer to form the first straight-edge electrode;
the fourth groove penetrates through the second substrate layer, the second conductive layer, and the electrochromic layer along the thickness direction of the electrochromic film, to expose a portion of the first conductive layer to form the second straight-edge electrode;
the second busbar is electrically connected to the second straight-edge electrode and the second corner electrode, and the first busbar is electrically connected to the first straight-edge electrode and the first corner electrode.

Furthermore, for two points on the edge portion that are separated by a first preset distance, the edge portion between these two points is a straight-edge portion if a condition is satisfied. The condition is: for any point on this edge portion, a vertical distance from this point to a line segment connecting the two points (defined as a second preset distance) is less than or equal to n times the first preset distance, where n is in the range of 5% to 10%. Alternatively, for two points on the edge portion separated by a first preset distance, the edge portion between them is a straight-edge portion if a condition is satisfied. The condition is determined by taking any point on this edge portion, which divides the edge portion into a first segment and a second segment. A first tangent line to the first segment at this point and a second tangent line to the second segment at this point are defined. The condition is satisfied if an included angle between the first tangent line and the second tangent line is less than 135°.

Furthermore, the corner portion includes a vertex and an end portion connecting two edges. For two points on the edge portion separated by a first preset distance, any point on the edge portion, which divides the edge portion into a first segment and a second segment, is the vertex of the corner portion if an included angle between a first tangent line to the first segment at this point and a second tangent line to the second segment at this point is less than 135°.

Furthermore, a value of the first preset distance ranges from 30 mm to 300 mm.

Furthermore, the corner area is an area formed between end portions connecting adjacent straight-edge portions, and an included angle between the straight-edge portions is less than 135°. Alternatively, a vertical distance from any point on the edge portion corresponding to two points of a first preset distance to a segment formed by the two points is defined as a second preset distance. When the second preset distance is greater than n times the first preset distance, a value of n ranges from 5% to 10%, and an area formed by the edge portion corresponding to the two points is the corner area.

Furthermore, a barrier portion is correspondingly arranged at the corner electrode. The barrier portion is configured to block or restrict a current conducted by the corner electrode from flowing from the barrier portion to the central portion.

A color-changing device is provided in some embodiments of the present disclosure. The color-changing device includes at least one substrate layer and the aforementioned electrochromic film, the substrate layer and the electrochromic film are laminated together.

A terminal product is provided in some embodiments of the present disclosure. The terminal product includes the aforementioned electrochromic film described above or the aforementioned color-changing device. The terminal product includes any one of a rearview mirror, a curtain wall, an automobile sunroof, an automobile side window, an automobile windshield, a housing of an electronic product, eyeglasses, a vehicle, and a display panel.

The embodiments of the present disclosure have the following advantages: a plurality of straight-edge electrodes and corner electrodes are arranged on the edge portion of the electrochromic film, and these straight-edge electrodes and the corner electrodes form electrical connections with the busbars. When the busbars are electrically connected to the external power supply, a current conduction speed in the electrochromic film may be increased, and the color-changing speed of the electrochromic film is increased accordingly. The length of the first spacing region is set to be greater than that of the second spacing region. Accordingly, when the corner electrode and the straight-edge electrode have the same polarity, one corner electrode and the adjacent straight-edge electrode are constituted as an edge portion of the same conductive layer, current diffuses within the same conductive layer. However, due to the presence of surface resistance in the conductive layer, the current diffusion is affected by the surface resistance of the conductive layer, and thus a voltage drop is caused. Therefore, the farther away from an electrode, the slower the conduction speed, and the lower the corresponding voltage. Accordingly, the point where current conducted by the straight-edge electrode and the corner electrode diffuses and superposes is relatively far from the straight-edge electrode and the corner electrode. In this case, due to the influence of the voltage drop in the conductive layer, the voltage at the superposition point will be relatively lower than the voltage at other areas. Thus, the farther away from the straight-edge electrode and the corner electrode, the greater the relative decrease of the voltage at the superposition point. Additionally, since the first spacing region is adjacent to the corner area, two superposition points at the corner area superpose again, while other non-corner areas undergo less other superpositions. Consequently, the voltage at the corner area reaches a more balanced state with the voltage intensity in other areas, the electrochromic layer in the corner area is enabled to change color uniformly with other areas without premature overcharging or overdischarging. Accordingly, corner failure in the electrochromic film is effectively avoided, and a service life of the electrochromic film is prolonged.

In order to make the above objectives, the features, and the advantages of the present disclosure be more obvious and readily understandable, the present disclosure is elaborated in detail below with reference to preferred embodiments and accompanying drawings.

### DESCRIPTION OF THE DRAWINGS

In order to illustrate the technical solutions in the embodiments of the present disclosure more clearly, the accompanying figures that need to be used in the embodiments will be described in detail below. It should be appreciated that, the accompanying drawings described below only illustrate some embodiments of the present disclosure, and thus shouldn't be considered as limitations to the protection scope of the present disclosure. A person of ordinary skill in the art may also obtain other drawings according to the current drawings without paying creative efforts.
FIG. 1 illustrates a schematic structural diagram of an electrochromic film from one perspective in accordance with an embodiment of the present disclosure;
FIG. 2-1 illustrates a schematic structural diagram of an electrochromic film from one perspective in accordance with another embodiment of the present disclosure;
FIG. 2-2 illustrates a schematic structural diagram of an electrochromic film in the FIG. 2-1 from another perspective in the present disclosure;
FIG. 3 illustrates an enlarged view of a part A in FIG. 2-1;
FIG. 4 illustrates a cross-sectional view of a part B-B in the FIG. 2-1;
FIG. 5 illustrates a schematic structural diagram of a first conductive layer of the electrochromic film in the present disclosure;
FIG. 6 illustrates a schematic structural diagram of a second conductive layer of the electrochromic film in the present disclosure;
FIG. 7 illustrates a schematic structural diagram of the electrochromic film in accordance with another embodiment of the present disclosure;
FIG. 8 illustrates an enlarged view of a part C in FIG. 7;
FIG. 9 illustrates a cross-sectional view of a section D-D in FIG. 7;
FIG. 10 illustrates a schematic structural diagram of the electrochromic film in another embodiment in the present disclosure;
FIG. 11 illustrates a schematic structural diagram of a color-changing device in accordance with one embodiment in the present disclosure.

Listing of reference numerals of main components:
100-electrochromic film; 110-central portion; 120-edge portion; 130-corner electrode; 140-straight-edge electrode; 200-first spacing region; 300-second spacing region; 150-first substrate layer; 160-first conductive layer; 170-electrochromic layer; 180-second conductive layer; 190-second substrate layer; 400-first busbar; 500-second busbar; 131-first corner electrode; 132-second corner electrode; 141-first straight-edge electrode; 142-second straight-edge electrode; 600-first barrier portion; 700-second barrier portion; 800-first groove; 900-second groove; 1000-third groove; 1100-fourth groove; 1200-substrate layer; 1300-shielding layer.

### DETAILED DESCRIPTION OF EMBODIMENTS

Hereinafter, embodiments of the present disclosure are described in detail, and examples of the embodiment are illustrated in the accompanying figures. An always unchanged reference number or similar reference numbers represent(s) identical or similar components or components having identical or similar functionalities. The embodiments described below with reference to the accompanying figures are for illustrative purpose and are intended to explain the present disclosure, and should not be considered as constituting any limitation to the present disclosure.

It needs to be explained that when an element is referred to as "fixed to" another element, the element may either be directly fixed on said another element or there may exist intervening element(s). When an element is regarded as being "connected to" another element, this element may either be directly connected to said another element or there may exist intervening element(s). Conversely, when it is described that an element is "directly fixed on" another element, there does not exist intervening element(s). Terms such as "vertical", "horizontal", "left", "right", and similar expressions used herein are only for illustrative purposes.

In the present disclosure, unless additional explicit stipulation and limitation are provided, terms such as "mount", "connect with each other", "connect", "fix", and so on should be interpreted in generalization. For example, "connect" may be interpreted as being fixedly connected, detachably connected, or connected integrally; "connect" can also be interpreted as being mechanically connected or electrically connected; "connect" may be further interpreted as being directly connected or indirectly connected through intermediary, or being internal communication between two components or an interaction relationship between the two components. For the person of ordinary skill in the art, the specific meanings of these terms in the present disclosure may be interpreted according to specific conditions.

In addition, terms "the first" and "the second" are only used for description purposes, and should not be considered as indicating or implying any relative importance, or implicitly indicating the number of indicated technical features. As such, technical feature(s) restricted by "the first" or "the second" can explicitly or implicitly include one or more such technical feature(s). In the description of the present disclosure, "a plurality of" has the meaning of two or more, unless there is additional explicit and specific limitation.

Unless otherwise defined, all technical and scientific terms used herein have the same meaning as normally understood by the person skilled in the art. The terms used in the specification of the present disclosure are only for the purpose of describing specific embodiments and are not intended to limit the present disclosure. The terms "and/or" used herein include any one or the combination of the listed associated items.

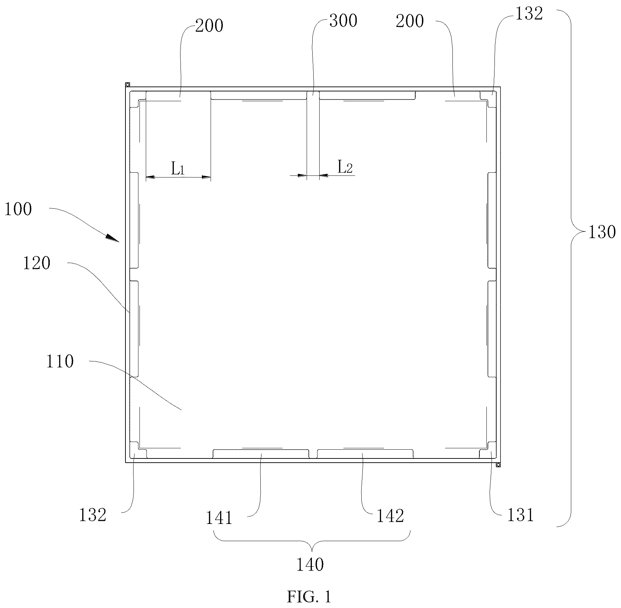

The present disclosure will be further elaborated below with reference to FIGS. 1 to 11.

Some embodiments of the present disclosure provide an electrochromic film that can change a color thereof in response to a voltage change applied across two ends thereof, thereby altering a transmittance of the film. The electrochromic film is mainly applied to windows, such as building curtain walls, car sunroofs, side windows, car windshields, electronic product casings, eyeglasses, and aircraft portholes.

As shown in FIGS. 1-4, in some embodiments of the present disclosure, the electrochromic film 100 includes a first substrate layer 150, a first conductive layer 160, an electrochromic layer 170, a second conductive layer 180, and a second substrate layer 190, which are stacked in sequence.

Both the first substrate layer 150 and the second substrate layer 190 are made of transparent and flexible materials, such as PET (Polyethylene terephthalate), PC, etc. The first conductive layer 160 and the second conductive layer 180 are both transparent conductive oxides, such as ITO (Indium Tin Oxide), IZO, etc. In this embodiment, ITO is deposited on the first substrate layer 150 and the second substrate layer 190 through magnetron sputtering.

It should be noted that the electrochromic layer 170 includes an electrochromic material layer, an electrolyte layer, and an ion-conducting layer, which are layered sequentially. Furthermore, in other embodiments, the electrochromic layer 170 may also be made of other materials such as liquid crystals.

By simultaneously connecting the first conductive layer 160 and the second conductive layer 180 to a power supply, a voltage difference may be formed between the first conductive layer 160 and the second conductive layer 180, such that the electrochromic layer 170 undergoes stable and reversible color changes under this voltage.

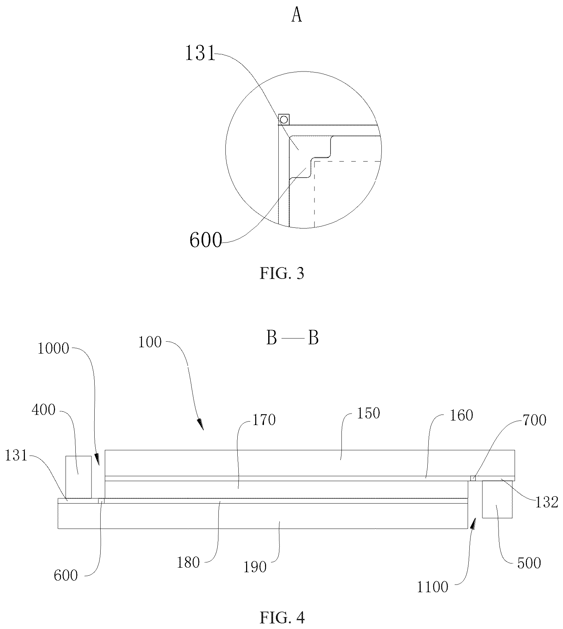

Referring to FIGS. 1 and 4, the electrochromic film 100 in this embodiment includes a central portion 110 and an edge portion 120 adjacent to the central portion 110. The edge portion 120 is connected to the central portion 110 and extends towards an exterior of the film. Specifically, the first substrate layer 150 extends from the central portion 110 towards the exterior of the film, thereby forming an edge portion 120 of the first substrate layer 150. Similarly, the second substrate layer 190 extends from the central portion 110 towards the exterior of the film, thereby forming an edge portion 120 of the second substrate layer 190. The projections of the edge portion 120 of the first substrate layer 150 and the edge portion 120 of the second substrate layer 190 on the electrochromic layer 170 are at least partially non-overlapping. The first conductive layer 160 also extends from the central portion 110 towards the exterior of the film and is deposited on a surface of the edge portion 120 of the first substrate layer 150, thereby forming the edge portion 120 of the first conductive layer 160. Similarly, the second conductive layer 180 extends from the central portion 110 towards the exterior of the electrochromic film 100 and is deposited on a surface of the edge portion 120 of the second substrate layer 190, thereby forming the edge portion 120 of the second conductive layer 180. The edge portion 120 of the electrochromic film 100 includes the edge portion 120 of the first substrate layer 150, the edge portion 120 of the first conductive layer 160, the edge portion 120 of the second substrate layer 190, and the edge portion 120 of the first conductive layer 160. It should be noted that in this embodiment, an outer circumference of the edge portion 120 of the electrochromic film 100 forms a perimeter of the edge of the electrochromic film 100. Specifically, the edge portion 120 of the electrochromic film 100 is formed by a continuous perimeter that surrounds and is adjacent to each side of the central portion 110.

By way of example, as shown in FIGS. 1 and 4, in the electrochromic film 100, the central portion 110 of the electrochromic film 100 is formed by stacking the respective central portions 110 of the first substrate layer 150, the first conductive layer 160, the electrochromic layer 170, the second conductive layer 180, and the second substrate layer 190. The electrochromic film 100 further includes busbars. The edge portion 120 is connected to the central portion 110 and extends to the outside of the electrochromic film 100. For ease of understanding and with specific reference to FIG. 1, an area enclosed by dashed lines is the central portion 110 of the film, and an area formed between the outside of the dashed lines and an outer edge of the film corresponds to the edge portion 120 of the film. It should be noted that the dashed line in FIG. 1 does not limit the edge of the central portion. In other embodiments, the position of the dashed line may be adjusted accordingly based on specific situations. In other embodiments, the edge portion 120 may be defined by the width of the film's electrodes, and a middle portion of the film adjacent to the edge portion 120 is the central portion 110. Since portions of the conductive layers need to be exposed for attachment of busbars, these exposed conductive portions form the electrodes, and the area where these electrodes are located defines the edge portion of the film.

It should be noted that the central portion 110 corresponds to a visible area of the electrochromic film 100, while the edge portion 120 corresponds to a non-visible area of the electrochromic film 100. The area of the central portion 110 is larger than that of the edge portion 120, and the transmittance of the film or the amount of light passing through the electrochromic film 100 is adjusted by the central portion 110. Additionally, in some embodiments of the present disclosure, the central portion 110 is a color-changing area of the electrochromic film 100, and the edge portion 120 is a non-color-changing area of the electrochromic film 100.

By way of example, when the electrochromic film 100 is applied to various windows, the electrochromic film 100 has multiple edges which are enclosed to form a closed edge of the film. The end connected between adjacent edges corresponds to a corner portion of the electrochromic film 100, the corner portion includes a vertex and an end portion connecting adjacent edges. For two points on the edge portion 120 that are separated by a first preset distance, any point on the edge portion 120 divides the edge portion 120 into a first segment and a second segment. The line tangent to the first segment and passing through the point is the first tangent line, and the line tangent to the second segment and passing through the point is the second tangent line. When an included angle between the first tangent line and the second tangent line is less than 135°, the point is determined as the vertex of the corner portion. The end portion connecting adjacent edges forms the corner area of the electrochromic film 100 accordingly. The edge may be a straight-edge or an irregular shape having a small degree of curvature, which can be regarded as a straight-edge. Therefore, any polygonal electrochromic film 100 has multiple corner areas. In this embodiment, in the electrochromic film 100 having the polygonal structure, the edge portion 120 includes multiple edges connected end to end in sequence, and these edges are connected end to end to form the edge portion 120. The angle formed by the connections between adjacent edges in the edge portion 120 of the electrochromic film 100 forms the corner portion of the edge portion 120, and an area within the film and corresponding to this corner portion is the corner area of the film, while an area of the edge portion 120 between adjacent corner areas corresponds to the straight-edge portion. Certainly, in other embodiments, the shape of the electrochromic film 100 may be irregular. For irregular shapes, where there are curved parts on the edges, the curved parts correspond to the corner portions of the film. In addition, it may be stipulated that a part of the edge portion 120, which has a curvature greater than a preset value, is determined as a corner portion. While a part of the edge portion 120, which has a curvature less than the preset value, is determined as a straight-edge portion, indicating that this part may be approximately regarded as a straight-edge portion.

Furthermore, the straight-edge portion involved in the present disclosure does not require a perfectly straight line. In an optional embodiment of the present disclosure, for two points on the edge portion that are separated by a first preset distance, the edge portion between these two points is a straight-edge portion if a condition is satisfied. The condition is: for any point on this edge portion, a vertical distance from this point to a line segment connecting the two points, which is defined as a second preset distance, is less than or equal to n times the first preset distance, wherein n is in a range of 5% to 10%. Optionally, the value range of the first preset distance is between 30 mm and 300 mm. Optionally, the first preset distance ranges from 5 centimeters to 20 centimeters, the second preset distance is 5% to 10% of the first preset distance, preferably 6% of the first preset distance. For example, the distance from the farthest point of the electrode corresponding to two points having a first preset distance of 5 centimeters to the line connecting the two points is less than 0.3 centimeters. For another example, the distance from the farthest point of the electrode corresponding to two points having a distance of 10 centimeters to the line connecting the two points is less than 0.5 centimeters. For yet another example, the distance from the farthest point of the electrode corresponding to two points having a distance of 20 centimeters to the line connecting the two points is less than 1 centimeter. In these examples, the portion corresponding to the two points is determined as a straight-edge portion. Specifically, the value of the first preset distance is related to the size of the color-changing device, the material of the conductive layer and the length of the electrode of the color-changing device, and may be adjusted according to the specific practical usage condition. In any embodiment of the present disclosure, the edge portion 120 corresponding to two points having the first preset distance refers to the edge portion 120 where the line connecting the two ends has the first preset distance. Any point on the edge portion 120 corresponding to two points having the first preset distance may also refer to any point on the edge portion 120 where the distance between the two ends is the first preset distance.

In an optional embodiment of the present disclosure, any point on the edge portion 120 corresponding to the two points of the first preset distance or any point on the edge portion 120 corresponding to the two ends having the first preset distance, divides the edge portion 120 between the two points having the first preset distance into the first segment and the second segment. The line passing through the point and tangent to the first segment is the first tangent line, and the line passing through the point and tangent to the second segment is the second tangent line. When the angle between the first tangent line and the second tangent line is less than 135°, the edge portion 120 corresponding to the two points is a straight-edge portion. When there exists multiple smaller curved portions in the edge portion 120, and the degrees of these curves are relatively small, tangents can more accurately describe whether the edge portion 120 is a straight-edge.

In an optional embodiment of the present disclosure, the vertical distance from any point on the edge portion 120 corresponding to two points having the first preset distance to the segment formed by the two points is a second preset distance. When the second preset distance is greater than n times the first preset distance, where n ranges from 5% to 10%, the edge portion 120 corresponding to the two points is determined as a corner portion, the area formed by the edge portion 120 corresponding to the two points is a corner area, and the corresponding electrode is a corner electrode.

In an optional embodiment of the present disclosure, two straight-edge portions intersect to form the corner portion, and an included angle between the two straight-edge portions is less than 135°. The corner area is the area formed between the end portions connecting adjacent straight-edge portions, and the included angle between the adjacent straight-edge portions is less than 135°. A specific length of an end portion of the straight-edge portion is set according to the size of the color-changing device. Alternatively, points on the edge portion 120 are constituted as the corner area if the points on the edge portion 120 satisfy the following condition: a maximum distance from any of these points on the edge portion 120 to the line connecting the two points is greater than the second preset distance.

In one embodiment of the present disclosure, the edge portion 120 includes a corner portion corresponding to the corner area of the electrochromic film 100 and a straight-edge portion corresponding to the non-corner area of the edge portion 120 of the electrochromic film 100. The corner portion is provided with a corner electrode 130, and the straight-edge portion is provided with a straight-edge electrode 140. The corner electrode 130 and the straight-edge electrode 140 are electrically connected to respective busbars. It should be noted that the expression "the corner electrode 130 and the straight-edge electrodes 140 are electrically connected to respective busbars" indicates that, in adjacent corner electrode and straight-edge electrode, a busbar connected to the corner electrode is electrically connected to a positive terminal of an external power supply, while a busbar connected to the straight-edge electrode is electrically connected to a negative terminal of the external power supply. In other words, the corner electrode and the adjacent straight-edge electrode are located on different conductive layers. By way of example, when the corner electrode is connected to the positive terminal of an external power supply via a busbar, the straight-edge electrode adjacent to the corner electrode is connected to the negative terminal of the external power supply. Additionally, when multiple straight-edge electrodes are arranged in any straight-edge portion of the edge portion 120 of the electrochromic film 100, adjacent straight-edge electrodes are respectively connected to the positive terminal and the negative terminal of an external power supply through different busbars along a circumferential direction of the electrochromic film 100. That is, in adjacent straight-edge electrodes, one straight-edge electrode is connected to the positive terminal of the external power supply via one busbar, and the other straight-edge electrode is connected to the negative terminal of the external power supply via another busbar. Certainly, in other exemplary embodiments, the expression "the corner electrode 130 and the straight-edge electrode 140 are electrically connected to respective busbars having the same polarity" indicates that the corner electrode and the adjacent straight-edge electrode are located on the same conductive layer.

When a busbar is electrically connected to the external power supply, the current from the external power supply is conducted to the conductive layer of the electrochromic film 100 through the busbar. Consequently, an electrical connection between the electrochromic film 100 and the external power supply is established, which allows the electrochromic film 100 to undergo stable and reversible color changes.

It should be appreciated that the number of corner portion(s) of the electrochromic film 100 is associated with the shape of the electrochromic film 100. It needs to be explained that the number of corner portion(s) is/are equal to the number of edge(s) of the electrochromic film 100. For example, if the shape of the electrochromic film 100 is a quadrangle, the number of corner portions is four. If the shape of the electrochromic film 100 is an N-sided polygon, the number of corner portion(s) is N. Certainly, in other embodiments, the shape of the electrochromic film 100 may be irregular. For an irregular shape, curved portion(s) is/are formed on edge(s), and the curved portion(s) correspond(s) to the corner portion(s). In addition, by specifying that a curvature of a portion of the edge portion 120 is within a certain range, this portion may be defined as a straight-edge portion, which indicates that this part of the edge portion 120 may be approximately regarded as a straight line portion.

In addition, the edge portion 120 of the electrochromic film 100 includes at least a first edge, a second edge, and a third edge, which are sequentially connected end to end. An embodiment of the present disclosure may further include a fourth edge. These edges are connected end to end to form the enclosed edge portion 120 of the electrochromic film 100. It should be noted that all edges may be provided with electrode areas. Alternatively, some edges may not be provided with electrode areas, which depends on the specific requirement.

Specifically, the inventors have found that during operation of the electrochromic film 100, due to the higher density of busbars per unit area in the corner areas of the film compared to the non-corner areas, the surface resistance in these corner areas is relatively lower than that in other regions. Therefore, during the charging and discharging process of the film, the current or the voltage in the corner areas of the film is higher than that in other regions. Relatively speaking, the electric field or the current corresponding to the corner areas is more intensified than that in other regions. With prolonged use, the aging of the conductive layer in these regions is accelerated, and the electrochromic layer 170 in these regions is overcharged or overdischarged, which leads to premature failure of the entire film.

Aiming at this problem, in the embodiment of the present disclosure, corner electrode(s) 130 is/are provided at corner portion(s) of the electrochromic film 100 and straight-edge electrode(s) is/are provided at straight-edge portion(s) of the edge region 120 corresponding to non-corner area. A first spacing region 200 is formed between a corner electrode and an adjacent straight-edge electrode, and a second spacing region 300 is formed between each pair of adjacent straight-edge electrodes 140. The adjacent straight-edge electrodes refer to the straight-edge electrodes located adjacent to each other on the same side of the electrochromic film 100, that is, the adjacent straight-edge electrodes of the straight-edge electrodes between the adjacent corner electrodes. The length of the first spacing region 200 is L₁, and the length of the second spacing region 300 is L₂, where 0< L₂<L₁. The length of the first spacing region 200 closest to the corner is set to be longer than that of other spacing regions (second spacing regions 300). Thus, when the corner electrode and the adjacent straight-edge electrode have the same polarity (as shown in FIG. 1), that is, they are both positive or negative, in other words, the corner electrode and the adjacent straight-edge electrode are the edge portion 120 of the same conductive layer, the current diffuses in the same conductive layer relative to the same busbar. However, due to the presence of surface resistance in the conductive layer, the current diffusion is affected by the surface resistance of the conductive layer, and a voltage drop is generated accordingly. Therefore, the farther away from the electrode, the slower the current conduction speed, and the lower the corresponding voltage. In this embodiment, the distance between a straight-edge electrode and a corner electrode is increased, and the point where current conducted by the straight-edge electrode and corner electrode diffuses and superposes are relatively far. In this condition, due to the action of the voltage drop in the conductive layer, the voltage at the superposition points decreases as compared to other areas, and the farther away from the straight-edge electrode and the corner electrode, the more the voltage decreases, the current intensity in the corner area is decreased accordingly. In addition, since two busbars near the corner area of the first spacing region 200 are provided, the current of one busbar also diffuses to the other busbar, a superposition is formed accordingly. Due to the relatively far distance from other non-corner area to other busbars, the current in a superposition area is much smaller. Thus, the aging of the conductive layer and the failure of the corners of the electrochromic film 100 in this area may be effectively avoided. Therefore, due to superposition of the two busbars in the corresponding corner area, the voltage intensity in this area is increased. Moreover, due to the increase in the spacing region, the influence of the diffusion of the straight-edge electrodes is reduced. Thus, the voltage intensity corresponding to the entire corner area reaches a relatively balanced state with other areas. The electrochromic layer 170 in the corner area is enabled to change color uniformly with other areas, without premature overcharging or overdischarging. Accordingly, the service life of the device is prolonged.

Specifically, the length of the first spacing region 200, denoted as L₁, is defined as the length of the first spacing region 200 measured along the direction of a straight edge on which it is disposed. The first spacing region 200 is located on one of the straight-edges within the non-corner area of the edge portion 120. Similarly, the length of the second spacing region 300, denoted as L₂, is the length of the second spacing region 300 measured along the direction of the straight edge on which it is disposed. Wherein the second spacing region 300 is also located on one of the straight-edges within the non-corner area of the edge portion 120.

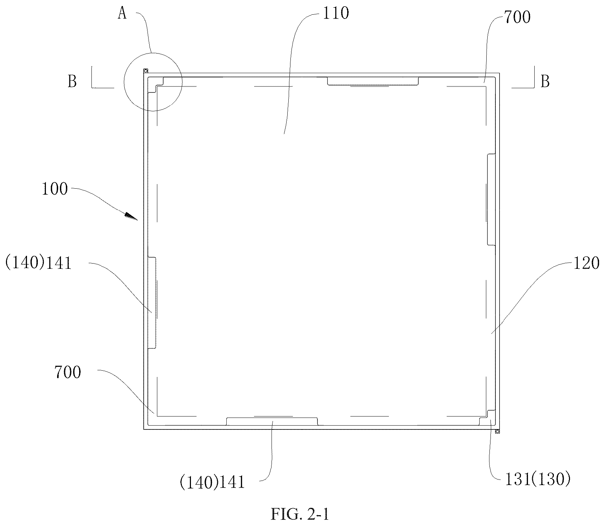

Optionally, in other embodiments of the present disclosure, unlike the aforementioned embodiments, as shown in FIGS. 2-1, 2-2, 5, and 6, the corner electrode and the adjacent straight-edge electrode have opposite polarities (i.e., a positive polarity and a negative polarity). Specifically, the corner electrode is located at the edge portion 120 of one conductive layer, while the adjacent straight-edge electrode is located at the edge portion 120 of the other conductive layer. When a voltage is applied to the electrochromic film 100, the conductive layer associated with the corner electrode is biased positively, and the conductive layer associated with the straight-edge electrodes is biased negatively (or vice versa). In this case configuration, an electric field is generated in the first spacing region 200 extending outward from the positively biased electrode toward the negatively biased electrode. The strength of this electric field depends on the distance between the two electrodes: the greater the distance between the two electrodes, the weaker the strength of the electric field. In the embodiments of the present disclosure, since the length of the first spacing region 200 is greater than that of the second spacing region 300, the electric field formed by the first spacing region 200 is weaker than that formed by the second spacing region 300. Additionally, since the electric field formed by two first spacing regions 200 adjacent to the corners is weaker than that formed by the second spacing region 300 in the straight-edge portion, the electric field formed by superposition of the electric fields from the two first spacing regions 200 corresponding to the corner areas shall not be too intensified. Therefore, the corner area is placed in a working environment with weaker electric field intensity. Accordingly, the possibility of aging of the conductive layer is reduced, and corner failure is effectively avoided.

Optionally, based on any one of the embodiments described above, the ratio of L₁ to L₂ is m, m=L₁/L₂. The value range of m is 1 ≤m≤4. Optionally, m is in the range of 2≤m ≤3. Optionally, m=2. The electric field intensity ratio between the corner area and the non-corner area may be adjusted through adjustment of a proportional relationship between the first spacing region 200 and the second spacing region 300. Accordingly, the electric field corresponding to the corner area reaches a relatively balanced state with the electric field intensity of other areas, the electrochromic layer 170 in the corner area is enabled to change color uniformly with other areas without premature overcharge or overdischarge. The failure of the corners of the electrochromic film 100 is effectively avoided while it is ensured that other areas do not fail prematurely. Thus, the service life of the entire electrochromic film 100 is guaranteed. In addition, a plurality of straight-edge electrodes are arranged between each pair of adjacent corner electrodes, these straight-edge electrodes are spaced apart and the polarities of each pair of adjacent straight-edge electrodes are opposite. That is, the electrodes which have the same polarity (e.g., the first straight-edge electrodes 141) are arranged at substantially equal intervals, while other electrodes which have opposite polarities (e.g., the second straight-edge electrodes 142) are respectively arranged at substantially equal intervals between the first electrodes. Accordingly, a basically uniform structure is formed. After connecting the busbars with the electrodes, current is allowed to be conducted from each edge of the film to the central portion 110 of the film. Due to alternating arrangement of the electrodes having opposite polarities, the current diffuses from the edges to the interior, and thus has the advantages of rapid and uniform color change.

In other embodiments, the polarities of the corner electrodes and the adjacent straight-edge electrodes across the entire film may be configured in various combinations. Which means that some corner electrodes and some straight-edge electrodes have the same polarity, while some other corner electrodes and some other straight-edge electrodes have opposite polarities.

It should be appreciated that in the embodiments of the present disclosure, regardless of how the polarity of the corner electrode and the adjacent straight-edge electrode are set, the length of the first spacing region 200 is set to be longer than that of the second spacing region 300, and thus a balanced electric field across the entire film may be achieved. Corner failure of the electrochromic film 100 is avoided, and the service life of the electrochromic film 100 is prolonged. The two ends of the corner electrode 130 are respectively provided with the first spacing region 200, that is, the electric field in the first spacing region 200 located at the two ends of the corner electrode 130 forms an electric field superposition at the corner of the corner electrode 130 during the diffusion process. The length of the first spacing region 200 is increased. Accordingly, the intensity of the superimposed electric field, which is formed at the corner of the electrochromic film 100 during the diffusion process of the electric field in the first spacing region 200, is reduced. The electric field intensity at the corner of the electrochromic film 100 is weakened, and excessive electric field intensity at the corner of the electrochromic film 100 is avoided. Thus, a balanced electric field intensity at various positions in the electrochromic film 100 is achieved. Accordingly, the stability and the durability of the electrochromic film 100 are improved.

Optionally, based on any one of the embodiments described above, the length of the corner electrode 130 is L₃, and the length of the straight-edge electrode 140 is L₄, L₃≤L₄. That is, the length of the straight-edge electrode is no less than that of the corner electrode. In addition, the length of the first spacing region 200 may be increased by directly shortening the corner electrode on the basis of the original film, without the need to adjust the spacing between other straight-edge electrodes. Therefore, the original drawings may be directly used for production. Alternatively, the length of the corner electrode may be adjusted directly after production. By increasing the length of the straight-edge electrode, the electric field intensity in the straight-edge portion of the edge portion 120 of the electrochromic film 100 is enhanced, and the electric field intensity in the corner portion of the edge portion 120 is decreased. Accordingly, the possibility of premature failure of the corners is reduced, and the service life of the film is prolonged. Moreover, there is no need to redesign a processing drawing, the process is simple. It should be noted that the length of the corner electrode 130 refers to the length of the corner electrode extending along adjacent edges, and the length of the straight-edge electrode 140 refers to the length of one single straight-edge electrode extending along the edge portion 120 of the electrochromic film 100.

Optionally, based on any one of the embodiments described above, the length of the corner electrode 130 is equal to that of the straight-edge electrode 140. Therefore, in this embodiment of the present disclosure, the length of the corner electrode is set to be equal to the length of the straight-edge electrode. Accordingly, an occurrence that the electric fields generated by the first spacing region 200 on adjacent sides superpose due to too short corner electrode, thereby leading to an increase in the electric field at the corner and premature failure of the corner area is avoided.

Optionally, based on any one of the embodiments described above, the length of the corner electrode 130 is less than that of the straight-edge electrode 140. Optionally, the ratio of the length of the straight-edge electrode to the corner electrode ranges from 3:1 to 2:1. By reducing the length of the corner electrode 130, the contact area between the corner area of the conductive layer and the busbars is reduced accordingly. Thus, the corresponding surface resistance at this location is increased. A function of decreasing current is realized, and the electric field intensity at the corner portion of the electrochromic film 100 is further weakened. Consequently, a balanced state of electric field intensity across the entire film is achieved, and the risk of corner failure in the film is reduced.

Optionally, improvements are made based on any one of the embodiments described above. A plurality of straight-edge electrodes are provided, the plurality of straight-edge electrodes having opposite electrical polarities are arranged alternately. A corner electrode and the adjacent straight-edge electrode have opposite polarities. Due to this arrangement, a multi-electrode structure is formed. It should be appreciated that in the embodiment of the present disclosure, a multi-electrode structure at the edge portion 120 is formed to improve the current conduction speed in the electrochromic film 100, thereby improving the color-changing speed of the electrochromic film 100. The number of the straight-edge electrodes can be selected as needed for a given application.

Optionally, improvement is made based on any one of the embodiments described above, on the same edge of the electrochromic film 100, the same edge refers to each side of the electrochromic film 100, such as the first edge, the second edge, the third edge, and the fourth edge. The lengths of the second spacing regions 300 between pairs of adjacent straight-edge electrodes are equal. For a color-changing device having large area, the distance between two opposite sides is relatively long. Due to the relatively long distance, a relatively weak electric field is generated at the superposition point of the electric fields, where the electric fields are generated in the second spacing regions 300 on the two opposite sides. That is, the possibility of mutual influence between the second spacing regions 300 on two opposite sides is relatively low. When the length of the straight-edge electrode is longer, the influence between two second spacing regions 300 on the same side may also be neglected. Therefore, setting the lengths of the second spacing regions 300 on the edges to be equal makes the overall film structure more neat and tidy.

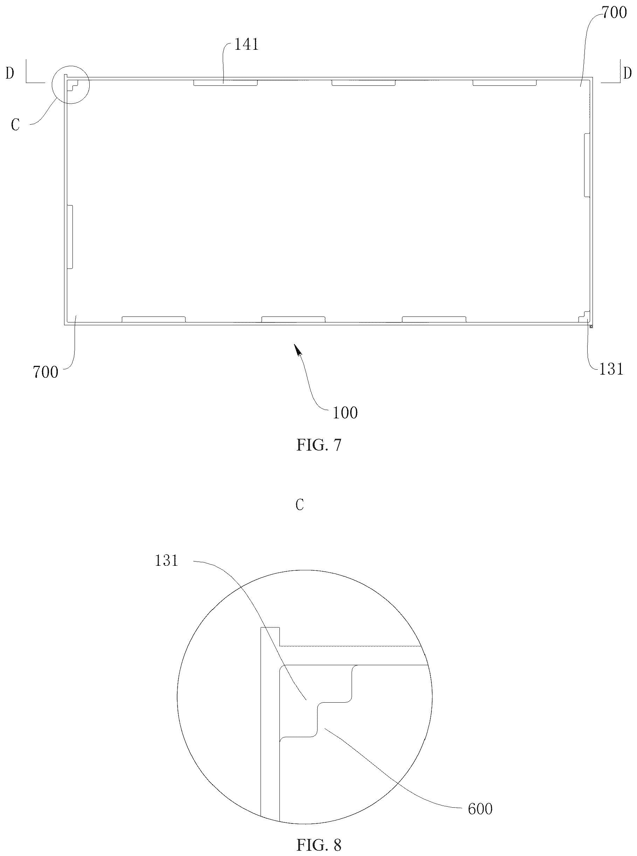

Optionally, improvements are made based on any one of the embodiments described above, as shown in FIGS. 7 to 9, in other embodiments of the present disclosure, the length of the second spacing region 300 decreases from two ends of the edge to the middle of the edge on the same edge of the electrochromic film 100. The length of the second spacing region 300 gradually decreases from the side closer to the corner electrode 130 to the side farther from the corner electrode 130. Certainly, in other embodiments, when the device area is large, the length of the first spacing region 200 in the same edge may be greater than the length of any second spacing region 300. Alternatively, the length of the middle second spacing region 300 may be the largest among all second spacing regions 300. Since the second spacing region 300 at the middle is farther from the corner, the impact on the corner area may be neglected. In this case, the length of the second spacing region 300 may be increased.

For example, when the number of second spacing regions 300 disposed at the edge portion 120 of the electrochromic film 100 and located on one side of the edge of the electrochromic film 100 and is five, the length of the first superposition region is d1, the lengths of the five second spacing regions 300, from one end of the edge portion 120 to the other, are denoted as d2, d3, d4, d3, and d2 in sequence.

It should be appreciated that d4<d3<d2<d1. It should be noted that, regarding a device having small area, in a case where the distance between the two opposite edges is relatively small, especially when the lengths of the straight-edge electrodes are also small, since each spacing region will spread outwards, the closer the spacing region is to the corner area, the stronger the superposed electric field intensity at the corner. Therefore, the lengths of the second spacing regions 300 located on the same side of the edge portion 120 of the electrochromic film 100 are adjusted. That is, the lengths of the second spacing regions 300 are reduced sequentially in the direction away from the corner area. In other words, on the same side, the length of each spacing region decreases sequentially from the two ends to the middle. In this way, the electric field intensity of each second spacing region 300 increases in the direction away from the corner area. Consequently, the superposed electric field intensity of the second spacing regions 300 in the corner area is reduced and is more balanced with the electric field in other regions. Accordingly, the superimposed electric field intensity at the corners of the electrochromic film 100 is further reduced, the uniformity of the electric field intensity throughout the film is improved during the charging process. Local premature aging at the corners of the electrochromic film 100 is avoided. The stability of the electrochromic film 100 is enhanced, and the service life of the electrochromic film 100 is prolonged. In addition, the lengths of the second spacing regions 300 in this embodiment are smaller in the middle, the smaller the length of the spacing region, the faster the corresponding color-changing speed. Since the middle part, which is closer to a visible area of a human eye, is noticed first. The middle part of the electrochromic film 100 may respond to a voltage change quickly and change color, thereby better satisfying human visual effects.

In some embodiments of the present disclosure, the length L₁ of the first spacing region 200 ranges from 5 mm to 200 mm. Specifically, the value range of L₁ may be any one of 5 mm < L₁≤200 mm, 5 mm<L₁≤150 mm, 5 mm<L₁≤100 mm, 5 mm< L₁≤50 mm, 5 mm < L₁≤25 mm, 5 mm<L₁≤20 mm, 5 mm< L₁≤15 mm, and 5 mm< L₁≤10 mm.

In addition, the length L₂ of the second spacing region 300 ranges from 5 mm to less than 200 mm.

It should be noted that the value range of L₂ may be any one of the following ranges of 5 mm <L₁≤200 mm, 5 mm<L₁≤150 mm, 5 mm<L₁≤100 mm, 5 mm<L₁≤50 mm, 5 mm<L₁≤25 mm, 5 mm< L₁≤20 mm, 5 mm< L₁≤15 mm, and 5 mm<L₁≤10 mm.

It should be appreciated that 5 mm≤L₂<L₁≤S200 mm. By controlling the length of the first spacing region 200 and the length of the second spacing region 300 to be between 5 mm and 200 mm, a situation in which the length of the spacing region is greater than that of the electrode area, thus affecting the electrical conduction speed of the film and subsequently affecting the color-changing speed is avoided. Specifically, when the length of the edge portion 120 is a certain value, if the length of the spacing region decreases, the length of the electrode area increases. Therefore, by reducing the length of the spacing region, the uniformity of electric field intensity between the corner area and the non-corner area of the edge portion 120 may be ensured. The length of the electrode area is increased accordingly. Thus, the current conduction speed on the electrochromic film 100 is increased, and the color-changing speed of the electrochromic film 100 is increased accordingly.

In some embodiments of the present disclosure, the sum of the total length of the first spacing region(s) 200 and the total length of the second spacing region(s) 300 is denoted as S₁, and the sum of the total length of thestraight-edge electrode(s) 140 and the total length of the corner electrode(s) 130 is denoted as S₂.

It should be noted that, the sum of the total length of the first spacing region(s) 200 and the total length of the second spacing region(s) 300 is denoted as S₁, which refers to the sum of the total length of the first spacing region(s) 200 and the total length of the second spacing region(s) 300 located on the same side of the edge portion 120 of the electrochromic film 100. Additionally, the sum of the total length of the straight-edge electrode(s) 140 and the total length of the corner electrode(s) 130 is denoted as S₂, which refers to the sum of the lengths of the straight-edge electrode(s) 140 and the total length of the corner electrode(s) 130 located on the same side of the edge portion 120 of the electrochromic film 100.

The ratio of S₁ to S₂ is n, specifically, n=S₁/S₂, and n is in the range of 1/11≤n<1. The length of the edge portion 120 along the outer circumference of the electrochromic film 100 is S, S=S₁+S₂. As the length of S₂ increases, the length of S₁ decreases. Optionally, the value of n is 1/11. Since the electrochromic film 100 is electrically connected to an external power supply through the corner electrode and the straight-edge electrode arranged on the edge portion 120, and the busbars are connected to the corner electrode and straight-edge electrode. When the value of S₂ increases, the contact area between the busbars, and the corner electrode and the straight-edge electrode increases. The speed at which current is conducted through the corner electrode and the straight-edge electrode to the edge portion 120 and the central portion 110 of the electrochromic film 100 increases, and the color-changing speed of the electrochromic film 100 is increased accordingly. In addition, when the electrochromic film 100 is being laminated, wrinkles are prone to occur during lamination due to the presence of the first spacing region 200 and the second spacing region 300 on the edge portion 120 of the electrochromic film 100, and the uneven thickness of the spacing regions and the electrode areas. Therefore, the lengths of the first spacing region 200 and the second spacing region 300 are reduced by increasing the lengths of the corner electrode and the straight-edge electrode. Wrinkles may be avoided during the lamination of the electrochromic film 100. Accordingly, the aesthetics, the stability, and the safety of the edge of the electrochromic film 100 are enhanced.

Specifically, the ratio of the length of the spacing region to the length of the electrodes on the same side of the edge portion 120 of the electrochromic film 100 is reduced. Accordingly, the length of the electrode region (i.e., the straight-edge electrode and the corner electrode) is increased relative to the spacing region. Since the straight-edge electrode and the corner electrode at the edge portion 120 of the electrochromic film 100 have a relatively long length, when an electrical connection is formed between the busbars and the external power supply, the larger the contact area with the busbars, the faster the speed of the current conducted to the straight-edge electrode and the corner electrode through the busbars. Accordingly, the current conduction speed on the electrochromic film 100 is increased, thus, the color-changing speed of the electrochromic film 100 is increased.

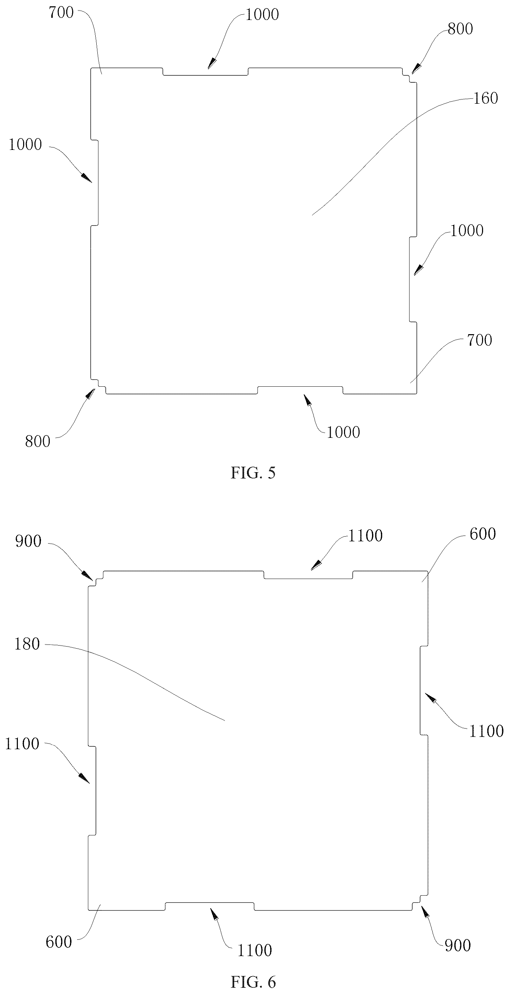

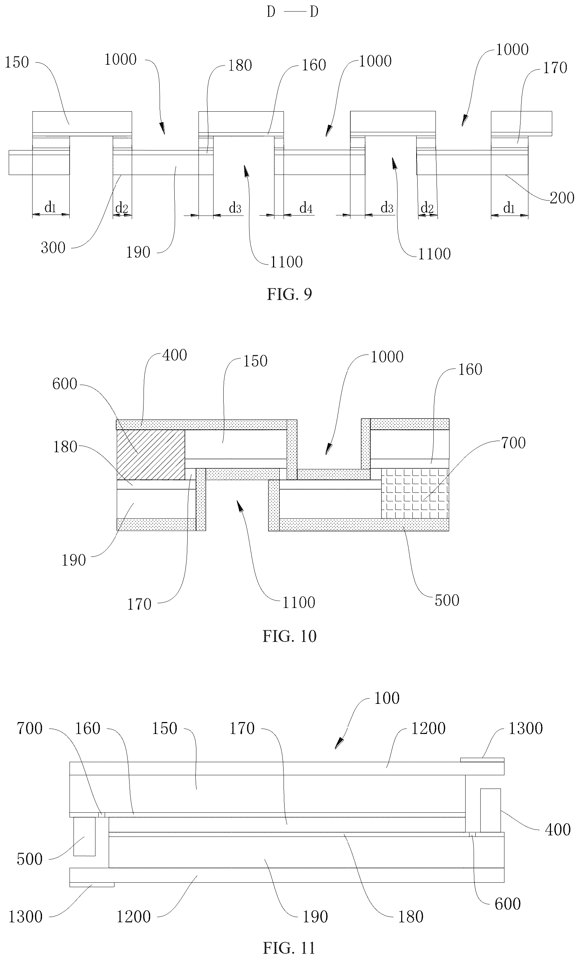

Optionally, as shown in FIGS. 1, 5 and 6, improvements have been made based on any one of the embodiments disclosed above. As shown in FIG. 1, a corner electrode and the adjacent corner electrode are located on the same conductive layer. As shown in FIGS. 5-6, the corner electrode and the adjacent corner electrode are located on different conductive layers. In these two configurations, the projections of the plurality of electrodes on the electrochromic layer 170 are identical. However, due to their different conductive layers, the orientations of the plurality of grooves are inconsistent. By way of example, as shown in FIG. 10, the corner portion of the electrochromic film 100 is provided with first groove(s) 800 and second groove(s) 900. The number of first groove(s) 800 and the number of second groove(s) 900 may be one, two, or any other arbitrary number, respectively. The number of first groove(s) 800 and the number of the second groove(s) 900 may be specifically set according to the actual situation. In this embodiment, the first grooves 800 and the second grooves 900 are alternately arranged on each edge of the electrochromic film 100, and a spacing region is provided between one first groove 800 and a second groove 900 adjacent to the first groove 800.

The busbars include a first busbar 400 and a second busbar 500 which are arranged on the two sides of the electrochromic film 100 in the thickness direction, respectively. One busbar is electrically connected to the first conductive layer 160, and the other busbar is electrically connected to the second conductive layer 180. The two busbars are separated by a spacing region in the non-electrode region. Accordingly, short-circuiting due to the contact between the first busbar 400 and the second busbar 500 is avoided. The stability and the safety are enhanced during the process of establishment of electrical connection between the first busbar 400 and the external power supply and between the second busbar 500 and the external power supply.

In addition, the corner electrode 130 refers to a first corner electrode 131 and a second corner electrode 132. It should be noted that the first corner electrode 131 and the second corner electrode 132 are arranged at intervals, which indicates that each corner portion of the electrochromic film 100 is provided with one said first corner electrode 131 or one said second corner electrode 132.

Specifically, the first groove 800 penetrates through the first substrate layer 150, the first conductive layer 160, and the electrochromic layer 170 in the thickness direction of the electrochromic film 100 in sequence, to expose a portion of the second conductive layer 180. The exposed portion of the second conductive layer 180 corresponding to the first groove 800 forms the first corner electrode 131, which is electrically connected to the first busbar 400. It should be appreciated that when the first busbar 400 is electrically connected to the external power supply, the current of the external power supply may be conducted to the second conductive layer 180 through the first busbar 400, thereby forming an electrical connection between the second conductive layer 180 and the external power supply. In this embodiment, a contact area between the exposed portion of the second conductive layer 180 corresponding to the first groove 800 and the external power supply is the first corner electrode 131, which serves to conduct the current of the external power supply from the corner portion of the second conductive layer 180 to the central portion 110 of the second conductive layer 180 of the electrochromic film 100.

Additionally, the second groove 900 sequentially penetrates through the second substrate layer 190, the second conductive layer 180, and the electrochromic layer 170 along the thickness direction of the electrochromic film 100, to expose a portion of the first conductive layer 160. The exposed portion of the first conductive layer 160 corresponding to the second groove 900 forms the second corner electrode 132 which is electrically connected to the second busbar 500. It should be appreciated that when the second busbar 500 is electrically connected to the external power supply, the current of the external power supply may be conducted through the second busbar 500 to the first conductive layer 160, thereby forming an electrical connection between the first conductive layer 160 and the external power supply. In this embodiment, the contact area between the exposed portion of the first conductive layer 160 corresponding to the second groove 900 and the external power supply is the second corner electrode 132, which serves to conduct the current of the external power supply from the corner portion of the first conductive layer 160 to the central portion 110 of the first conductive layer 160 of the electrochromic film 100.

It should be noted that the electrochromic film 100 is electrically connected to the external power supply by connecting the first busbar 400 and the second busbar 500 to the positive terminal and the negative terminal of the external power supply, respectively.

Optionally, improvements are made based on any one of the above embodiments of the present disclosure. As shown in FIGS. 1, 2, 7, and 9, the straight-edge electrode 140 refers to a first straight-edge electrode 141 and a second straight-edge electrode 142. It should be noted that the first straight-edge electrode 141 and the second straight-edge electrode 142 are spaced apart and arranged at the edge portion 120 of the electrochromic film 100. The first straight-edge electrode 141 and the second straight-edge electrode 142 are configured to be electrically connected to the positive terminal and the negative terminal of the external power supply, respectively.

As shown in FIGS. 5 and 6, the straight-edge portion of the edge portion 120 of the electrochromic film 100 is provided with third grooves 1000 and fourth grooves 1100 which are arranged at intervals.

Specifically, each third groove 1000 penetrates through the first substrate layer 150, the first conductive layer 160, and the electrochromic layer 170 in the thickness direction of the electrochromic film 100, to expose a portion of the second conductive layer 180. The exposed portion of the second conductive layer 180 corresponding to the third groove 1000 forms the first straight-edge electrode 141. The first straight-edge electrode 141 is electrically connected to the first busbar 400 and is in contact with the external power supply through the first busbar 400. It should be appreciated that in this embodiment, the contact area between the exposed portion of the second conductive layer 180 corresponding to the third groove 1000 and the external power supply is the first straight-edge electrode 141, which serves to conduct the external power supply's current from the straight-edge portion of the second conductive layer 180 to the central portion 110 of the second conductive layer 180 of the electrochromic film 100. The first straight-edge electrode 141 and the first corner electrode 131 are arranged on the edge portion 120 of the electrochromic film 100 to form a multi-electrode structure on the edge portion 120 of the electrochromic film 100. The first busbar 400 is attached on one side of the electrochromic film 100 in the thickness direction and is in contact with the first straight-edge electrode 141 and the first corner electrode 131. This multi-electrode arrangement may increase the conduction speed of the external power supply's current flowing through the second conductive layer 180.

Furthermore, each fourth groove 1100 sequentially penetrates through the second substrate layer 190, the second conductive layer 180, and the electrochromic layer 170 along the thickness direction of the electrochromic film 100, to expose a portion of the first conductive layer 160. The exposed portion of the first conductive layer 160 corresponding to the fourth groove 1100 forms the second straight-edge electrode 142. In this embodiment, the contact area between the exposed portion of the first conductive layer 160 corresponding to the fourth groove 1100 and the external power supply is the second straight-edge electrode 142, which serves to conduct the external power supply's current from the straight-edge of the first conductive layer 160 to the central portion 110 of the first conductive layer 160 of the electrochromic film 100.

Optionally, further improvements are made based on the embodiments described above. The busbars include a first busbar 400 and a second busbar 500, and the first straight-edge electrode 141 is electrically connected to the first busbar 400. It should be appreciated that the first straight-edge electrode 141 and the first corner electrode 131 are arranged on the edge portion 120 of the electrochromic film 100, thereby forming a multi-electrode structure on the edge portion 120 of the electrochromic film 100. The first busbar 400 is attached on one side of the electrochromic film 100 in the thickness direction and is in contact with the first straight-edge electrode 141 and the first corner electrode 131. This multi-electrode arrangement may increase the conduction speed of the external power supply's current flowing through the second conductive layer 180. The second straight-edge electrode 142 is electrically connected to the second busbar 500. It should be appreciated that the second straight-edge electrode 142 and the second corner electrode 132 are arranged on the edge portion 120 of the electrochromic film 100, thereby forming a multi-electrode structure on the edge portion 120 of the electrochromic film 100. The second busbar 500 is attached to the other side of the electrochromic film 100 in the thickness direction and is electrically connected to the second straight-edge electrode 142 and the second corner electrode 132, the second busbar 500 and the first busbar 400 supply power to the electrochromic film 100 together, thereby increasing the conduction speed of the external power supply's current flowing through the first conductive layer 160.

Specifically, the first corner electrode 131, the second corner electrode 132, the first straight-edge electrode 141, and the second straight-edge electrode 142 are arranged on the edge portion 120 of the electrochromic film 100. These electrodes 131, 132, 141 and 142 are connected to the positive terminal and the negative terminal of the external power supply through the first busbar 400 and the second busbar 500, respectively. External current is conducted from the edge portion 120 to the central portion 110 of the electrochromic film 100. Thus, the conduction speed of the external power supply's current flowing through the first conductive layer 160 and the second conductive layer 180 is increased. The color-changing speed of the electrochromic film 100 is increased accordingly.

Optionally, based on any one of the embodiments of the present disclosure, as shown in FIGS. 1, 6, and 7, in order to reduce the electric field at the corners of the edge portion 120 of the electrochromic film 100 and prevent the electric field at the corner electrode 130 from affecting the central portion 110 of the electrochromic film 100, a barrier portion is provided at the corner portion. This barrier portion blocks or reduces the corner electrode's current from conducting from the barrier portion to the central portion 110. Specifically, since the current at the busbar flows from the edge portion 120 of the conductive layer to the central portion 110 of the conductive layer, the barrier portion is positioned on the side of the edge portion 120 adjacent to the central portion 110. Thus, the barrier portion arranged at the corner of the edge portion 120 is provided to block the busbar's current from conducting from the edge portion 120 of the conductive layer to the central portion 110 of the conductive layer of the electrochromic film 100. Consequently, the current at the corner of the electrochromic film 100 is decreased, and premature failure of the electrochromic layer 170 at the corner due to overcharging or overdischarging for long time is avoided. Furthermore, the current at the corner is reduced, the electric field intensity is decreased at this corner. In this way, the distribution of the electric field intensity between the corner area and the non-corner area of the edge portion 120 of the electrochromic film 100 may be balanced. An occurrence of corner aging failure or local aging failure throughout the entire electrochromic film 100 is avoided. Accordingly, the stability and the durability of the electrochromic film 100 are enhanced.

Specifically, as shown in FIGS. 1, 2, and 4, in some embodiments of the present disclosure, the barrier portion includes a first barrier portion 600 and a second barrier portion 700. The first corner electrode 131 is correspondingly provided with the first barrier portion 600, and the second corner electrode 132 is correspondingly provided with the second barrier portion 700. Both the first barrier portion 600 and the second barrier portion 700 are located on one side of the first busbar 400 adjacent to the central portion 110. By providing a barrier portion that penetrates through the corresponding conductive layer at each corner electrode, the structure becomes simplified, more compact, and symmetrical. Additionally, the thickness of the film is not too thick locally to affect the quality of the assembled film, and the production process is simple.

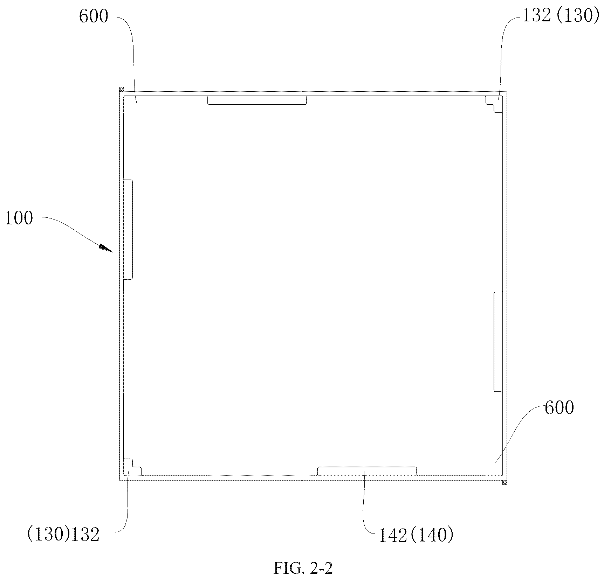

As shown in FIG. 4, the first barrier portion 600, corresponding to the first corner electrode 131, at least penetrates through the conductive layer in contact with the busbar in the thickness direction of the electrochromic film 100. The first corner electrode 131 is formed by the exposed portion of the second conductive layer 180 after the first groove 800 penetrates through the first substrate, the first conductive layer 160, and the electrochromic layer 170. In this case, the barrier portion may be formed by laser etching at a position of the second groove 900 away from the central portion 110. Since the first groove 800 has already been etched at the corner after the electrodes are cut and formed. As shown in FIG. 2, it only needs to cut the barrier portion on the basis of the first groove 800. Due to this arrangement, prevention of current conduction from the first barrier portion 600 to the corner of the conductive layer is effectively ensured, and early failure at the corner is effectively prevented accordingly. In addition, the manufacturing process of the film is simple, and the laser cutting process is cost-effective, which has the advantages of saving time and cost. In other optional embodiment, as shown in FIGS. 7 and 8, the distance between the first barrier portion 600 and the first groove 800 ranges from 1 mm to 20 mm, and the distance between the second barrier portion 700 and the second groove 900 ranges from 1 mm to 20 mm. Due to this arrangement, sufficient distance between the barrier portion and the busbar is reserved, the space for adhering of the busbars is provided, the busbar is prevented from being too wide and thus crossing over the barrier portion and is attached on the side of the conductive layer adjacent to the central portion 110, the current cannot be effectively prevented from conducting from the corner portion to the central portion. Alternatively, the depth data of the first groove 800 at the corner may be directly modified when cutting the first groove 800 at the corner. For example, the first groove 800 at the corner is arranged to penetrate through the first substrate, the first conductive layer 160, the electrochromic layer 170, and the second conductive layer 180. The first barrier portion 600 may be formed at any position between the edge of the first groove 800 and the busbar. Certainly, in other embodiments, the first barrier portion 600 may also be arranged on a side of the groove adjacent to the central position, such as acting on the second conductive layer 180 by penetrating through the second substrate via infrared radiation at a corresponding position, or penetrating through the second substrate and the second conductive layer 180 by laser cutting. The corresponding formation method of the second barrier portion 700 penetrating through the corresponding second corner electrode 132 and at least penetrating through the first conductive layer 160 in the thickness direction of the electrochromic film 100 may refer to any of the formation methods of the first barrier portion 600 described above, and will not be repeatedly described herein.

As shown in FIG. 10, in some embodiments of the present disclosure, the barrier portion is disposed between a busbar and a corner electrode 130.

Optionally, the barrier portion is disposed between a busbar and the conductive layer, and the surface resistance of the barrier portion is greater than that of the busbar. As shown in FIG. 10, in some embodiments of the present disclosure, the first barrier portion 600 is disposed between the busbar and the first corner electrode 131. The barrier portion may be a high-temperature insulating adhesive, an insulating adhesive, or other material having a relatively high resistance. That is, the first barrier portion 600 is disposed between the first busbar 400 and the first corner electrode 131 and separates the first busbar 400 from the first corner electrode 131. Thus, direct contact between the busbar and the first corner electrode 131 is avoided. The first barrier portion 600 is provided to block or decrease the current during the conduction of the current from the first busbar 400 to the first corner electrode 131. Accordingly, the magnitude of the current conducted to the first corner electrode 131 is decreased, and the electric field intensity of the conductive layer corresponding to the first corner electrode 131 is lowered.

And/or, the second barrier portion 700 is disposed between the busbars and the second corner electrode 132, that is, the second barrier portion 700 is positioned between the second busbar 500 and the second corner electrode 132. The second barrier portion 700 separates the second busbar 500 from the second corner electrode 132, thereby preventing a direct contact between the second busbar 500 and the second corner electrode 132. The second barrier portion 700 is provided to block, restrict, or decrease the current during the conduction of current from the second busbar 500 to the second corner electrode 132. Accordingly, the magnitude of the current conducted to the second corner electrode 132 is decreased, and the electric field intensity at the second corner electrode 132 is lowered.

It should be noted that in some embodiments of the present disclosure, the first barrier portion 600 and the second barrier portion 700 are respectively made of insulating materials including insulating glue or high-temperature glue. The first barrier portion 600 blocks the current on the first busbar 400 from conducting to the first corner electrode 131. The second barrier portion 700 blocks the current on the second busbar 500 from conducting to the second corner electrode 132. Consequently, the electric field at the first corner electrode 131 and the electric field at the second corner electrode 132 are prevented from affecting the interior of the electrochromic film 100. Thus, the stability of the electrochromic film 100 is improved, and the balance between the electric field at the corner area and the electric field at the non-corner area of the electrochromic film 100 is enhanced. Accordingly, the service life of the electrochromic film 100 is prolonged. Additionally, the insulating glue and the high-temperature glue may be applied to adhere the first busbar 400 and the second busbar 500 to the electrochromic film 100. Thus, the stability of connection between the first busbar 400 and the electrochromic film 100 and the stability of the connection between the second busbar 500 and the electrochromic film 100 are improved.

As shown in FIG. 11, some embodiments of the present disclosure further provide a color-changing device, the color-changing device may be applied to any one of the following products, including but not limited to: an automobile sunroof, a side window, a rearview mirror, a building curtain wall, and a housing of an electronic device. The color-changing device includes at least one substrate layer 1200 and the electrochromic film 100 described in any of the above-described embodiments. The substrate layer 1200 and the electrochromic film 100 are stacked together.

Specifically, the substrate layer 1200 is a transparent structure. For example, the substrate layer 1200 may be transparent glass, transparent acrylic board, transparent PVC board, or the like.

The electrochromic film 100 is sandwiched between two substrate layers 1200, and the edges of the electrochromic film 100 are sealed with sealant. Moreover, two substrate layers 1200 are connected through PVB to form a sealed color-changing device.

The sealant is a transparent insulating colloid which may be, for example, PVB (Polyvinyl Butyral) or OCA (Optically Clear Adhesive).

Furthermore, the sealant can not only form an adhesive bond between the two substrate layers 1200 and the electrochromic film 100, but also serve as a sealing layer that isolates the electrochromic film 100 from oxygen and air. Thus, the electrochromic film 100 is prevented from coming into contact with external moisture and oxygen, the service life of the electrochromic film 100 is prolonged. Accordingly, the service life of the color-changing device is also prolonged.

Additionally, a surface of the substrate layer 1200 corresponding to the edge portion 120 of the electrochromic film 100 is provided with a shielding layer 1300. The shielding layer 1300 may be arranged on an inner surface or an outer surface of the substrate layer 1200 and may be made of a shielding material such as metal or black ink. As shown in FIG. 11, a width of the shielding layer 1300 is greater than or equal to a width of the edge portion 120. In order to prevent a user from directly seeing the edge portion 120 of the electrochromic film 100 through the transparent substrate layer 1200, the shielding layer 1300 is arranged at the edge of the substrate layer 1200. The shielding layer 1300 is provided to shield the busbars and barrier portions at the edge of the electrochromic film 100, thereby enhancing the aesthetics of the color-changing device. Furthermore, the width of the shielding layer 1300 is greater than the width of the edge portion 120. Generally, the width of the shielding layer 1300 extends from the outer edge of the film to the central portion to exceed the edge portion 120 of the film. Optionally, the shielding layer 1300 extends beyond the width of the corner electrode by 10 to 20 mm. Due to prolonged use of the film, the edge portion 120 may fail earlier. The shielding layer 1300 is provided to not only cover the edge portion 120 of the film, but also shield a potentially failing part, thereby preventing the user from directly observing the failure area, thus affecting the visual effect of the user.

A terminal product is provided in another embodiment of the present disclosure. The terminal product includes any electrochromic film 100 described above or the color-changing device described above. The terminal product includes any one of a rearview mirror, a curtain wall, an automobile sunroof, an automobile side window, an automobile windshield, a housing of an electronic product, eyeglasses, a vehicle, and a display panel. The vehicle may be any of a car, a train, an airplane, etc. Since the terminal product adopts the electrochromic film 100, the terminal product possesses all benefits of the aforementioned electrochromic film 100.

In all examples shown and described herein, any specific value should be interpreted as merely exemplary rather than limiting. Therefore, other examples of the exemplary embodiments may have different values.

It should be noted that similar reference numerals and alphabets indicate similar items in the following figures. Therefore, once an item is defined in one figure, this item does not need to be further defined and explained in subsequent figures.

The embodiments described above only represent several implementation methods of the present disclosure with relatively specific and detailed descriptions. However, these embodiments should not be construed as limiting the scope of the present disclosure. It should be noted that for a person of ordinary skill in the art, several variations and improvements can also be made without departing from the concept of the present disclosure. These variation and improvements are all included in the protection scope of the present disclosure.

### Industrial applicability

The present disclosure provides an electrochromic film, a color-changing device, and a terminal product. The electrochromic film includes an edge portion, the edge portion includes a corner portion corresponding to a corner area of the electrochromic film and a straight-edge portion corresponding to a non-corner area of the electrochromic film. The corner portion is provided with corner electrode(s), and the straight-edge portion is provided with straight-edge electrode(s). A first spacing region is formed between a corner electrode and an adjacent straight-edge electrode, and a second spacing region is formed between each pair of adjacent straight-edge electrodes. A length of the first spacing region is denoted as L₁, and a length of the second spacing region is denoted as L₂, L₂ < L₁. The length of the first spacing region is set to be greater than that of the second spacing region. Thus, the electrochromic layer in the corner area changes color uniformly with other areas without overcharging or overdischarging. Accordingly, premature corner failure of the electrochromic film is effectively avoided.

In addition, it should be appreciated that the electrochromic film, the color-changing device, and the terminal product disclosed herein are reproducible and may be utilized in various industrial applications. For instance, the electrochromic film, the color-changing device, and the terminal product disclosed herein may be applied in the field of electrochromic technologies.

## Claims

1. An electrochromic film, **characterized by** comprising an edge portion;
wherein the edge portion comprises a corner portion corresponding to a corner area of the electrochromic film and a straight-edge portion corresponding to a non-corner area of the electrochromic film, the corner portion is provided with corner electrode(s), and the straight-edge portion is provided with straight-edge electrode(s);
a first spacing region is formed between the corner electrode and a straight-edge electrode adjacent to the corner electrode, and a second spacing region is formed between each pair of adjacent straight-edge electrodes;
a length of the first spacing region is denoted as L₁, a length of the second spacing region is denoted as L₂, wherein L₂<L₁.

2. The electrochromic film according to claim 1, **characterized in that**, a length of the corner electrode is L₃, and a length of the straight-edge electrode is L₄, wherein L₃≤L₄, or L₁<L₄, or both.

3. The electrochromic film according to claim 1, **characterized in that**, a ratio of L₁ to L₂ is m, and a value range of m is 1≤m≤4.

4. The electrochromic film according to any one of claims 1 to 3, **characterized in that**, a polarity of the corner electrode is opposite to a polarity of the straight-edge electrode adjacent to the corner electrode.

5. The electrochromic film according to claim 1, **characterized in that**, a plurality of straight-edge electrodes are provided, and the second spacing region is formed between each pair of adjacent straight-edge electrodes;
wherein on a same edge of the electrochromic film, lengths of these second spacing regions between pairs of adjacent straight-edge electrodes are identical; alternatively, a length of the second spacing region decreases from two ends of an edge towards a middle of the edge.

6. The electrochromic film according to claim 1, **characterized in that**, a value range of the length L₁ of the first spacing region is 5 mm<L₁≤200 mm, or a value range of the length L₂ of the second spacing region is 5 mm≤L₂<200 mm, or both.

7. The electrochromic film according to claim 1, **characterized in that**, a sum of a total length of the first spacing region and a total length of the second spacing region is denoted as S₁;
a sum of a total length of the straight-edge electrode(s) and a total length of the corner electrode(s) is denoted as S₂;
wherein a ratio of S₁ to S₂ is n, and a value range of n is 1/11≤ n < 1.

8. The electrochromic film according to claim 1, **characterized by** comprising a first substrate layer, a first conductive layer, an electrochromic layer, a second conductive layer, and a second substrate layer which are laminated in sequence; wherein the corner portion is provided with a first groove and a second groove;
wherein the corner electrode comprises a first corner electrode and a second corner electrode;
the first groove penetrates through the first substrate layer, the first conductive layer, and the electrochromic layer along a thickness direction of the electrochromic film, to expose a portion of the second conductive layer to form the first corner electrode;
the second groove penetrates through the second substrate layer, the second conductive layer, and the electrochromic layer along the thickness direction of the electrochromic film, to expose a portion of the first conductive layer to form the second corner electrode.

9. The electrochromic film according to claim 8, **characterized in that**, the straight-edge electrode comprises a first straight-edge electrode and a second straight-edge electrode, and the straight-edge portion is provided with a third groove and a fourth groove arranged in an alternate manner;
wherein the third groove penetrates through the first substrate layer, the first conductive layer, and the electrochromic layer along the thickness direction of the electrochromic film, to expose a portion of the second conductive layer to form the first straight-edge electrode;
the fourth groove penetrates through the second substrate layer, the second conductive layer, and the electrochromic layer along the thickness direction of the electrochromic film, to expose a portion of the first conductive layer to form the second straight-edge electrode.

10. The electrochromic film according to claim 8, **characterized in that**, the straight-edge electrode comprises a first straight-edge electrode and a second straight-edge electrode, the electrochromic film further comprises busbars, wherein the busbars comprise a first busbar and a second busbar;
the straight-edge portion is provided with a third groove and a fourth groove arranged in an alternate manner;
the third groove penetrates through the first substrate layer, the first conductive layer, and the electrochromic layer along the thickness direction of the electrochromic film, to expose a portion of the second conductive layer to form the first straight-edge electrode;
the fourth groove penetrates through the second substrate layer, the second conductive layer, and the electrochromic layer along the thickness direction of the electrochromic film, to expose a portion of the first conductive layer to form the second straight-edge electrode;
wherein the second busbar is electrically connected to the second straight-edge electrode and the second corner electrode, and the first busbar is electrically connected to the first straight-edge electrode and the first corner electrode.

11. The electrochromic film according to any one of claims 1 to 10, **characterized in that**, for two points on the edge portion that are separated by a first preset distance, the edge portion between these two points is a straight-edge portion if a following condition is satisfied: for any point on this edge portion, a vertical distance from this point to a line segment connecting the two points, which is defined as a second preset distance, is less than or equal to n times the first preset distance, wherein n is in a range of 5% to 10%;
alternatively, for two points on the edge portion separated by a first preset distance, the edge portion between the two points is a straight-edge portion if a condition is satisfied, the condition is determined by taking any point on this edge portion, which divides the edge portion into a first segment and a second segment, a first tangent line to the first segment at this point and a second tangent line to the second segment at this point are defined, the condition is satisfied if an included angle between the first tangent line and the second tangent line is greater than or equal to 135°.

12. The electrochromic film according to any one of claims 1 to 10, **characterized in that**,
for two points on the edge portion that are separated by a first preset distance, the edge portion between these two points is a corner portion if a following condition is satisfied: for any point on this edge portion, a vertical distance from this point to a line segment connecting the two points, which is defined as a second preset distance, is greater than n times the first preset distance, wherein n is in a range of 5% to 10%;
alternatively, the corner portion comprises a vertex and an end portion connecting two straight-edge portions, for two points on the edge portion separated by a first preset distance, any point on the edge portion, which divides the edge portion into a first segment and a second segment, is determined as the vertex of the corner portion if an included angle between a first tangent line to the first segment at this point and a second tangent line to the second segment at this point is less than 135°.

13. The electrochromic film according to claim 11, **characterized in that**, a value of the first preset distance ranges from 30 mm to 300 mm.

14. The electrochromic film according to any one of claims 1 to 10, **characterized in that**, the corner area is defined as an area formed between end portions connecting adjacent straight-edge portions, and an included angle between the two straight-edge portions is less than 135°;
alternatively, for two points on the edge portion that are separated by a first preset distance, an area formed by the edge portion between these two points is the corner area if a following condition is satisfied: for any point on this edge portion, a vertical distance from this point to a line segment connecting the two points, which is defined as a second preset distance, is greater than n times the first preset distance, wherein n is in a range of 5% to 10%.

15. The electrochromic film according to claim 10, **characterized in that**, a barrier portion is correspondingly arranged at the corner electrode, and the barrier portion is configured to block or restrict a current conducted by the corner electrode from flowing from the barrier portion to a central portion.

16. The electrochromic film according to claim 15, **characterized in that**, the barrier part comprises an etching area formed by etching a portion of the conductive layer or a filler having a resistance greater than that of the busbar, or both.

17. A color-changing device, **characterized by** comprising at least one substrate layer and the electrochromic film according to any one of claims 1 to 16, wherein the substrate layer and the electrochromic film are laminated together.

18. A terminal product, **characterized by** comprising the electrochromic film according to any one of claims 1-16 or the color-changing device according to claim 17, wherein the terminal product comprises any one of a rearview mirror, a curtain wall, an automobile sunroof, an automobile side window, an automobile windshield, a housing of an electronic product, eyeglasses, a vehicle, and a display panel.
